# EUROPEAN PATENT SPECIFICATION

(11) **EP 2 047 136 B1**
(45) Date of publication and mention of the grant of the patent: **23.02.2011**
(21) Application number: 07747551.5
(22) Date of filing: 05.07.2007
(51) Int. Cl.: F16F 6/00

(54) **SPRING, ASSEMBLY OF SPRINGS, ASSEMBLY OF A SPRING AND A DAMPER, AS WELL AS A VEHICLE COMPRISING A SPRING**
FEDER, FEDERANORDNUNG, FEDER- UND DÄMPFERANORDNUNG SOWIE EINE FEDER UMFASSENDES FAHRZEUG
RESSORT, ASSEMBLAGE DE RESSORTS, ASSEMBLAGE D'UN RESSORT ET D'UN AMORTISSEUR, AINSI QU'UN VÉHICULE COMPRENANT UN RESSORT

(30) Priority: 05.07.2006 WO PCT/NL2006/000335
(43) Date of publication of application: 15.04.2009
(73) Proprietor: AB SKF, 415 50 Göteborg (SE)
(72) Inventor: ENCICA, Laurentiu, NL-5616 JK Eindhoven (NL); PAULIDES, Johannes Jacobus Hubertus, NL-5146 AD Waalwijk (NL); LOMONOVA, Elena Andreevna, NL-5627 NL Eindhoven (NL); VANDENPUT, André Jean Adolf, B-3500 Hasselt (BE); VAN LEEUWEN, Bernie G., NL-3431 EG Nieuwegein (NL)
(74) Representative: Burö, Sven Peter
(86) International application number: PCT/NL2007/050332
(87) International publication number: WO 2008/004871

(56) References cited:
- DE-A1- 2 024 746
- DE-A1- 10 147 720
- FR-A- 2 415 751
- FR-A1- 2 586 462
- JP-A- 2004 068 906
- JP-A- 2004 360 747
- US-A- 5 017 819
- US-A1- 2006 056 993

## Description

### Field of the invention

The invention relates to a spring, more particularly to a spring in which permanent magnets on a first part and soft magnetic material on a second part are used, and which parts have a stroke along a longitudinal axis relative to each other (see, for example, FR-A-2 586 462, corresponding to the preamble of claim 1).

The invention also relates to an assembly of springs, to an assembly of a spring and a damper and to a vehicle having a wheel and a wheel suspension into which a spring according to the invention is integrated.

### Description of the prior art

US-5,584,364 describes a magnetic unit used as a shock absorber or load leveler for a vehicle and having a plurality of groups of permanent magnets arranged in a side-by side relationship.

EP-A-0 391066 describes an integrated spring system comprising a conventional spring, a magnetic spring and a damper. The magnetic spring has an inner part and an outer part each provided with permanent magnets, whereby the directions of the fields of the inner and outer parts are opposite so that a negative spring stiffness is provided, which, in combination with the conventional spring provides a spring system with a non-linear spring characteristic. The spring stiffness is small around the neutral or aligned position and is large when the spring is compressed further.

In both US'364 and EP'066 the repulsive force between two neighboring permanent magnets, which are oppositely oriented, is used for evoking a spring effect.

### Summary of the invention

An object of the invention is to provide a spring comprising a first part with at least one permanent magnet with which a large spring force response, i.e. a large increase or decrease in force with relative displacement, may be provided and wherein said force response is rapidly adjustable during operation of the spring, while the volume of the spring is relatively small.

To that end the invention as defined in claim 1 provides a spring comprising a first part and a second part, the two parts being movable relative to each other along a longitudinal axis, the first part being provided with at least one permanent magnet, the second part being provided with at least one tooth of a soft magnetic material which faces the at least one permanent magnet with a facing surface when the first part is in an aligned position relative to the second part, whereby the total area of the facing surface varies as the first part moves relative to the second part, the first and/or the second part also being provided with at least one set of electrically conductive windings which are connected to an electric power supply in order to create a magnetic field for influencing the force-displacement characteristic of the spring.

Such a spring uses the so-called reluctance or detent force for evoking the spring force. The reluctance force is a manifestation of the fact that the magnetic field produced by the permanent magnets prefers to extend through a path having maximal permeability. When, for example, the first part is moved out of the aligned position relative to the second part, the permanent magnets are moved out of alignment with their corresponding teeth. Consequently, the total area of the surfaces of the permanent magnets facing the surfaces of the teeth diminishes, and with it the area through which the magnetic field passes. The magnetic field is now forced to extend through a path outside of the teeth having a lower permeability. As a result, the reluctance or detent force urges the first and the second part back into a position whereby the area of the facing surfaces is maximized.

Since the reluctance or detent force is a strong force, a large spring force can be obtained within a relatively small volume envelope. Furthermore, a magnetic spring as described exhibits approximately linear spring force behavior, i.e. constant spring stiffness, even closely around the neutral or aligned position of the two spring parts. In conventional mechanical springs, linear spring force behavior is observed only in partly compressed compression springs or partly extended draw springs.

The spring according to the invention provides a force in two directions, i.e. the spring has a force-displacement characteristic in both the first and the third quadrant of a force-displacement diagram. Therefore, the direction along the longitudinal axis in which the first part is moved out of alignment with the second part is theoretically irrelevant: reluctance forces will urge the two parts back into an aligned position no matter what direction the initial displacement was in. Practically though, it is likely that implementation choices are made that break up the symmetry inherent to a simple configuration.

A set of electrically conductive windings, provided on a part of the spring and connected to a power supply, is used to create a magnetic field, the strength of which may be varied at any time by adjusting the strength of the current through the windings. The windings are preferably substantially co-axial. Windings provided on the second part of the spring interact with magnets provided on the first part, and vice versa. The magnetic field of the windings may be directed at immediate interaction with the permanent magnets, or at interaction with the permanent magnets through an intermediary soft magnetic material. In the latter case the soft magnetic material may provide a path of high permeability while reinforcing the magnetic field. Either way, the interaction between the magnetic field of the windings provided on a part, and the magnets provided on another part, influences the force response of the spring, and thus allows its force-displacement characteristic to be adjusted during operation.

In an embodiment of the invention a substantially common axis of the at least one set of windings extends in a direction substantially parallel to the longitudinal axis of the spring. Preferably, the at least one permanent magnet provided on the first part is positioned relative to the windings such that the magnet moves along the windings when the first part moves out of the aligned position relative to the second part.

Positioning the windings as described ensures adequate interaction between the windings and the at least one permanent magnet, i.e. between the second and the first part of the spring respectively, during operation of the spring. The strength of the interacting forces is dependent on the strength of the at least one permanent magnet, the design of the teeth and on the strength and other characteristics of the current through the windings. Any current through the windings is preferably direct current (DC) or rectified or non-rectified alternating current (AC) either with or without an offset in order to maintain a steady magnetic field. Nevertheless, the current, in particular the strength thereof, may be changed to alter the strength of the interaction forces, thereby adjusting the behavior of the spring. Changes to the current may be applied at any time during operation of the spring. In fact, it is the application of changes during operation of the spring that provides the spring with its advantageous dynamic behavior.

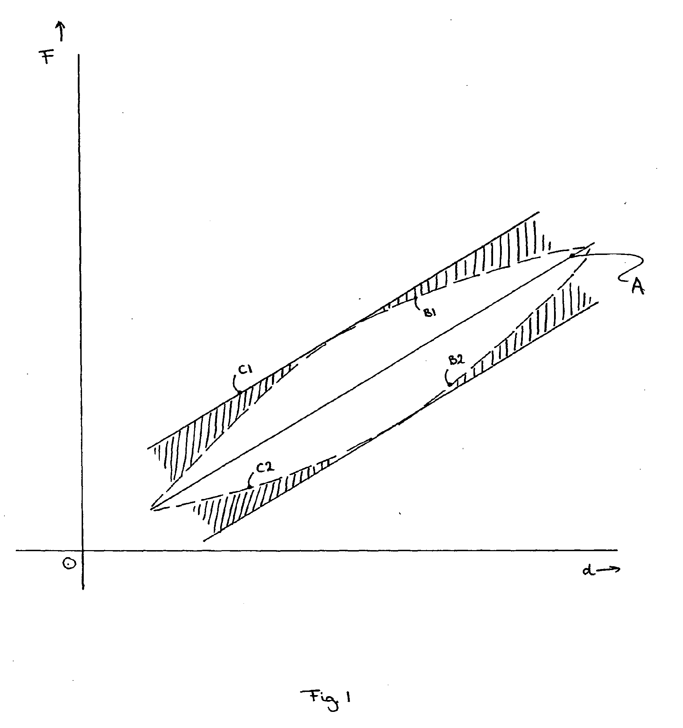

As stated before, the behavior of such spring may be altered by changing the current through the windings. FIG. 1 schematically shows the force-displacement characteristic of such a spring for various currents. In FIG. 1, the first quadrant of a force-displacement diagram is shown, the spring force F being plotted against the relative displacement d of the two spring parts. The straight line labeled A denotes the approximately linear spring characteristic in case the windings carry no current, i.e. the spring is passive. The force response range of the spring can be varied by applying a constant or a variable current with or without a DC component with a small ripple to the windings. Depending on the direction of the current through the windings, the force-displacement relation will take the shape of curve B1 or curve B2. The curves B1 and B2 thus obtained have been found not to be straight, but curvilinear. This has several implications. First of all, the spring constant, i.e. the slope of the graph, is no longer constant over the relative displacement domain of the spring. Secondly, since the hatched areas in the graph are not encompassed by the curves B1 or B2, the operating area falls short of the aim of providing dynamic and controllable spring behavior around the extremes of the relative displacement domain.

To overcome this problem according to an embodiment of the invention the at least one set of windings comprises a number of subsets of windings, each subset being composed of adjacent windings, the subsets being located at different longitudinal positions along the length of the first or the second part, wherein at least one parameter of a current through the windings of a said subset, such as the direction or the strength of the current, is controllable by an electric power supply control so as to be different from a corresponding parameter of a current through another of said subsets.

With such an embodiment, controllability is obtained even around the extremes of the relative displacement domain.

In a further embodiment, the electric power supply control may provide that the at least two subsets carry equal but opposite currents. As a result, the curves bounding the operating area of the spring may assume the shape of substantially straight lines, similar to the curves C1 and C2 in FIG. 1. Thus, advantageously, the use of two subsets of windings carrying opposite currents allows for expansion of the operating area of the spring, as indicated with the hatched areas in FIG. 1, while maintaining an approximately constant spring constant.

In an embodiment of the invention, a combination of windings that compose a said subset of windings is variable during operation of the spring.

To refine the controllability of the behavior of the spring, and thus the force-displacement characteristic of the spring, the combinations of windings that compose the subsets of windings may be variable during operation of the spring.

The variability can be obtained in an embodiment in which a number of adjacent windings of said set of windings constitute a coil, a said subset of windings including a number of said coils. In such an embodiment the electric power supply control may comprise a switching assembly, each switch being connected to a coil, a said coil being connected to said power supply via a said switch so that in a first position of the switch the current flows through the coil in a first direction, and in a second position of the switch the current flows through the coil in a second direction opposite to the first. The power supply control controlling the switches then determines whether a current flows through a certain coil, and if so, in what direction. In such a configuration, a subset may comprise multiple adjacent coils sharing the same current characteristics. If desired, the power supply control may instantly decide to deactivate a coil, or to make it part of another subset sharing other current characteristics by altering the status of the switch.

According to a further elaboration of the invention, the spring comprises a displacement sensing device for providing information about the distance over which the first part is displaced relative to the second part compared to a reference position, said displacement sensing device being configured to cooperate with an electric power supply control.

Preferably, the electric power supply control is configured to cooperate with the displacement sensing device for regulating the currents, including the direction thereof, through said different subsets of windings in dependence of the relative displacement of the first and second parts.

To optimally control the currents through the windings of the spring, it is desirable that information about the present relative displacement of the two spring parts is available to the electric power supply control.

In an embodiment of the invention the electric power supply control ensures that a current through a subset of a said set of windings, which subset is composed of windings that directly face the permanent magnet, is directed in a first direction and that the current through remaining windings is directed in a second direction opposite to the first direction.

Tests have shown that in particular with such an embodiment, the curves bounding the operating area of the spring may assume the shape of substantially straight lines, similar to the curves C1 and C2 in FIG. 1 and thus allow for expansion of the operating area of the spring while maintaining a constant spring constant.

Information about the relative positions of the two parts may, for example, be gathered by mechanical, electrical or optical position sensors.

According to a further elaboration of the invention, the electric power supply control has an input for a load sensor for providing information about the force being applied to the spring. Preferably, the electric power supply control is configured to cooperate with the load sensor for regulating the currents, including the direction thereof, through said different subsets of windings.

To optimally control the currents through the windings of the spring, it is desirable that information about the force being applied to the spring is rapidly available to the electric power supply control. A sudden change in the force applied to the spring may, for example, require a swift reaction of the power supply control in the form of an increased current strength in order to prevent the spring from being compressed abruptly. Information about the applied force may, for example, be gathered by using commercially available load cells or load force sensors in the bearing of a wheel supported by the spring. However, also an embodiment in which the load cell is part of the spring is feasible.

According to a further embodiment of the invention the total area of the facing surface is maximal when the first part is in the aligned position relative to the second part, and diminishes as the first part moves out of the aligned position relative to the second part.

In the aligned position, permanent magnets directly face their corresponding teeth. Therefore, apart from the effects caused by currents through the windings or other spring force generating devices such as additional conventional springs and/or additional permanent magnets on the second part, the spring force caused by reluctance forces will be smallest. As the two parts of the spring move out of alignment with each other, and the total area of the facing surfaces diminishes, the spring force caused by reluctance forces increases.

The teeth on the second part of the spring are preferably interconnected by a base of soft magnetic material. In addition to that, the permanent magnets mounted on the first part are preferably mounted on a base of soft magnetic material. In this manner a closed path, which is highly permeable to the magnetic field, is formed for the purpose of obtaining a closed magnetic field extending through two neighboring teeth via the base of the second part, the permanent magnets and the base of the first part. The reluctance or detent force evoked in such a construction as the two spring parts move out of alignment with each other is large because the rate of change of permeability with position and the density of the magnetic field are large as well.

The invention also provides an assembly of a spring according to any of the preceding embodiments and a conventional spring to form a spring assembly.

A spring according to the present invention can be connected to a conventional spring, such as a helical or a gas spring, in parallel or in series.

Placing the two springs in parallel results in a reduced load per spring while preserving the same stroke length of the spring according to the invention. Placing the two springs in series leads to the same force in both springs at all times while decreasing the stroke length of the spring according to the invention.

The invention also provides an assembly of a spring or a spring assembly according to the invention and a damping device, the spring or spring assembly and the damping device being connected in parallel. The damping device can be a device separate from the spring, or can be integrated into the spring.

The invention also provides a vehicle provided with at least one wheel and a suspension via which the wheel is connected to a chassis of the vehicle, the suspension comprising at least one spring or spring assembly according to any one of the preceding claims. Since the spring is of the active type, i.e. comprises a coil which is controlled by a control for influencing the spring characteristic of the spring, an active suspension with a very short response time can be obtained while the spring is rather simple and robust from a constructional point of view.

### Brief description of the drawings

FIG. 1 shows the first quadrant of a schematic force-displacement diagram of a spring according to the invention.
FIG. 2 shows a schematic cross-section of a first embodiment the spring.
FIG. 3A shows a schematic cross-section of a second embodiment of the spring.
FIG. 3B schematically shows a switching assembly.
FIG. 4 schematically shows a vehicle with a wheel and a wheel suspension.
FIG. 5 schematically shows two wheels of a vehicle with an anti roll bar and an embodiment of the spring according to the invention.

### Detailed description of the drawings

FIG. 1 has been described in detail above.

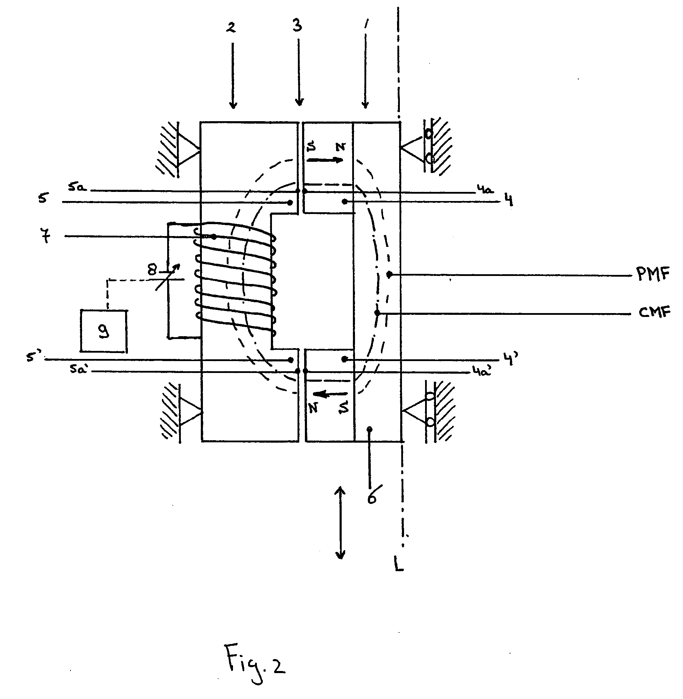

The embodiment of FIG. 2 shows a spring having a first part 1 and a second part 2 moveable relative to each other along a longitudinal axis L. In this embodiment, the first part 1 is a mover and the second part 2 is a stator. The mover is guided in a guide which can be provided by bearings in a known manner. The bearings can be of various types such as ball or roller support bearings, magnetic bearings, fluid bearings, sliding bearings or the like. Between the first part 1 and the second part 2, a gap 3 is present. The first part 1 is provided with permanent magnets 4, 4' of a hard magnetic material. In this embodiment, the permanent magnets 4, 4' are mounted on a base 6 of soft magnetic material. The second part 2 includes and is preferably entirely made of soft magnetic material. The second part 2 is provided with two teeth 5, 5', made of a soft magnetic material, which each face a permanent magnet 4, 4' with a facing surface 5a, 5a' when the first part 1 is in an aligned position relative to the second part 2. The facing surfaces 5a, 5a' of each tooth 5, 5' are directed towards a facing surface or pole 4a, 4a' of the corresponding permanent magnets 4, 4'. Neighboring permanent magnets 4, 4' preferably have an opposite magnetic direction. In FIG. 2, the magnetic direction of each magnet 4, 4' is indicated by an arrow in the magnet 4, 4'. The north pole of the magnets 4, 4' is indicated by N and the south pole is indicated by S. The gap 3 extends between the two teeth 5, 5' and the corresponding permanent magnets 4, 4'. When the first part 1 moves out of the aligned position into a non-aligned position relative to the second part 2 along the longitudinal axis L, the total area of the facing surfaces varies. In the embodiment shown in FIG. 2, the total area of the facing surfaces is maximal when the first part 1 is in the aligned position relative to the second part 2 and diminishes when the first part 1 moves out of the aligned position relative to the second part 2 along the longitudinal axis L.

As the first part 1 moves out of the aligned position relative to the second part 2, the two parts 1,2 will be urged back into the aligned position due to a reluctance or detent force, which thereby provides a spring force in a direction parallel to the longitudinal axis L. For a certain volume envelope of the spring, the reluctance or detent force provides a relatively high spring force characteristic. The spring has the special feature that it incorporates both a compression spring and a draw spring characteristic. In other words, in a force-displacement diagram, the spring acts in the first and the third quadrant, whereby the spring force-displacement characteristic around the aligned position is linear to good approximation.

The second part 2 is provided with and partly encircled by a coil 7, which is connected to a variable electrical power supply 8. The power supply is controlled by a control 9. The coil 7 produces a coil magnetic field CMF when a current flows through the windings of the coil. The coil magnetic field can have the same direction as the magnetic field PMF produced by the permanent magnets 4, 4'. If so, the spring force is increased relative to the passive configuration, i.e. no current flowing through the windings of the coil. On the other hand, the coil magnetic field may have a direction opposite to the direction of the magnetic field PMF produced by the permanent magnets 4, 4'. In that case the spring force is diminished relative to the passive configuration. The direction of the coil magnetic field CMF is determined by the direction of the current through the windings of the coil. The density of the coil magnetic field is determined by the current strength in the coil.

The control 9 is adapted to continuously control the current strength in the coil 7, and to vary it if desired, therewith controlling the spring force of the spring. Instead of a single characteristic in the force-displacement diagram which would be obtained for a passive spring (i.e. not provided with a coil), an entire spring force area in the first and the third quadrant of the diagram is covered by a single spring. At any moment, at any displacement position, the spring force exerted by the spring can be instantaneously adjusted by varying the current in the coil 7. This can be effected at a very high rate with virtually no response time. Thus an active spring is obtained.

From a constructional point of view it is preferable that the coil is integrated into the stationary part of the spring, here the stator 2. However, the invention also covers embodiments in which the coil is integrated into the moveable part of the spring, here the mover 1.

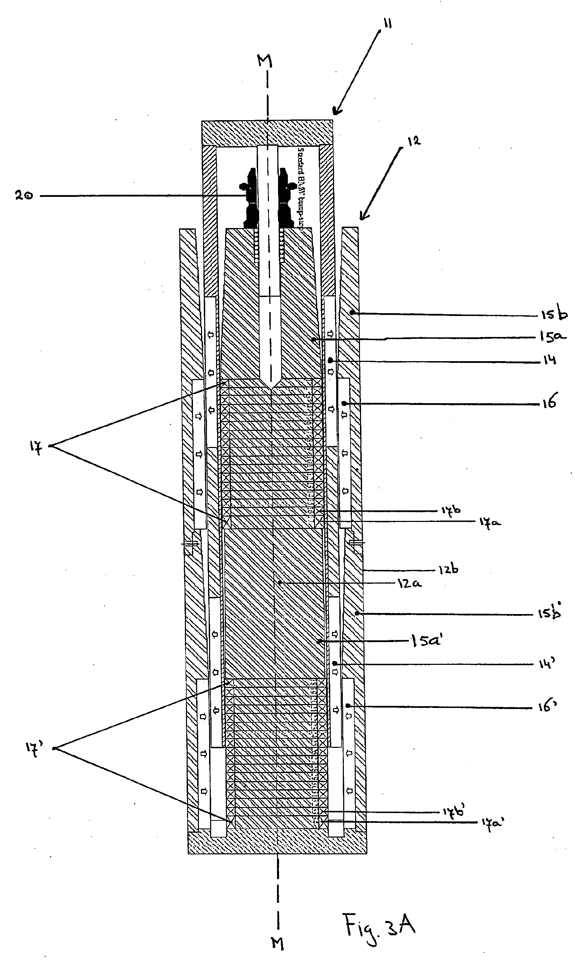

FIG. 3A shows a schematic cross-section of a second embodiment of a spring according to the invention. The spring exhibits rotational symmetry around the longitudinal axis M. A first part 11 of the spring is provided with permanent magnets 14, 14'. A second part 12 has an inner part 12a and an outer part 12b, thus creating two gaps between the first part 11 and the second part 12. The outer part 12b of the second part of the spring is provided with teeth 15, 15'. The inner part 12a of the second part 12 is provided with teeth 15b, 15b'. The second part 12 is also provided with permanent magnets 16, 16', two sets of electrically conductive windings 17, 17', and a bumpstop 20. The arrows inside the permanent magnets 14, 14', 16, 16' indicate the directions of the magnetic fields, pointing from south to north, although the polarity of all the permanent magnets may be reversed without functional consequences, as long as the relative polarity between any two magnets is preserved.

To increase the spring force that can be exerted by the spring, multiple teeth 15a, 15a', 15a, 15b' are provided on the second part 12 along the longitudinal axis, whereby each tooth corresponds to a permanent magnet 14, 14' provided on the first part 11. In the aligned position (not shown), a tooth 15a, 15a', 15b, 15b' immediately faces its corresponding permanent magnet 14, 14' respectively, thereby minimizing reluctance forces. It will be clear that the spring may be provided with an arbitrary number of tooth-permanent magnet combinations, with a minimum of one.

The teeth 15a, 15a', 15b, 15b' are not block shaped like the teeth 5, 5' in FIG. 2, but slanted instead. In general, changing the profile of the surface of the teeth influences the force-displacement characteristic of the spring, and allows the characteristic to be tailored. The teeth may have any shape required; they may for example be block shaped, slanted, saw tooth shaped or follow a convex or concave curve.

To further increase the spring force that can be exerted by the spring, the second part 12 has been provided with permanent magnets 16, 16'. The permanent magnets 16 and 16' are positioned next to the teeth 15b and 15b' respectively, and oriented such that their magnetic fields increasingly oppose the respective fields of the permanent magnets 14 and 14' provided on the first part 11, as the first part 11 moves out of the aligned position relative to the second part 12 in the stroke direction. The permanent magnets 16, 16' can also serve to provide a force/displacement characteristic in a force/displacement diagram in which a sudden increase in force occurs directly around the zero displacement region so that it seems that the force/displacement characteristic is offset vertically in the diagram. In an alternative embodiment, the permanent magnets 16, 16' may be replaced by coils or arrays of coils, connectable to an electric power supply to form electromagnets, such that the strength and/or the effective position of the magnets can be adjusted during operation of the spring.

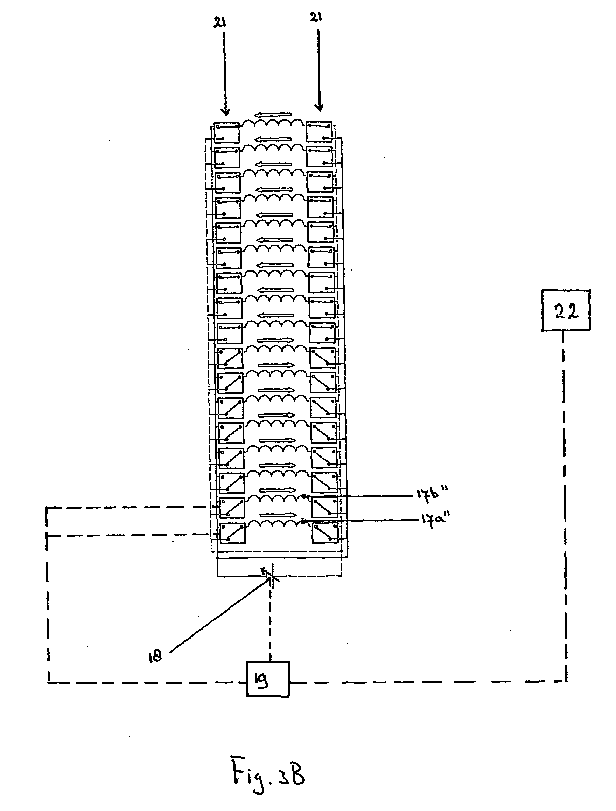

The embodiment of the spring shown in FIG. 3A features two sets of substantially co-axial electrically conductive windings 17, 17', each set comprising a number of coils 17a, 17a', 17b, 17b', etc, in this case seventeen. The windings of the coils 17a, 17a', 17b, 17b', etc. partly encircle an inner part of the second part 12 of the spring. FIG. 3B schematically shows how the coils of a set 17, 17' are connected to a variable electric power supply 18 via a switching assembly 21, the switches of the switching assembly 21 being controlled by an electric power supply control 19 which also controls the power supply 18 itself. More about FIG. 3B will be said below.

The second part 12 of the spring is largely made of a soft magnetic material: the teeth 15a, 15a', 15b, 15b', the non-permanently magnetic parts of the second part connecting the teeth 15, 15', and the inner part of the second part 12 around which the coils are placed are made of a soft magnetic material. The soft magnetic material increases the interaction forces within the spring, and provides a higher force response. The non-permanently magnetic parts of the first part 11 connecting the permanent magnets 14, 14' are also made of a soft magnetic material, for the same reasons.

In the aligned position, the teeth 15a, 15a', 15b, 15b' provided on the second part 12 immediately face their corresponding permanent magnets 14, 14' provided on the first part 11 with their facing surfaces. As the first part 11 moves out of the aligned position relative to the second part 12, the total area of the facing surface, i.e. the total area of the surfaces of the teeth directly facing the surfaces of their corresponding permanent magnets, diminishes. In FIG. 3A, the total area of the facing surface has diminished to about half of its value in the aligned position.

As the first part 11 moves out of alignment with the second part 12, several more or less separately identifiable forces acting between the two spring parts are evoked, all contributing to the total spring force. A first force contribution is made by the reluctance or detent forces, evoked as a direct consequence of the circumstance that the total area of the surfaces of the teeth immediately facing the surfaces of their corresponding permanent magnets diminishes. A second force contribution is made by repulsive forces, acting between the permanent magnets 14, 14' provided on the first part and the permanent magnets 16, 16' respectively, provided on the second part. A third contribution to the total spring force is made by the interaction forces between the current carrying windings of the coils 17a, 17b, 17a', 17b', etc. provided on the second part 12 and the permanent magnets 14, 14' provided on the first part 11.

The magnetic fields produced by the coils 17a, 17b, 17a', 17b', etc. are variable since said coils are connected to a variable electric power supply 18 via a switching assembly 21, the switches of the switching assembly 21 being controlled by an electric power supply control 19 which may also control the power supply 18 itself. Consequently, the force contributions that directly or indirectly involve the magnetic fields generated by the coils 17a, 17b, 17a', 17b' etc. are also variable.

In FIG. 3B it is shown that the power supply control 19 has grouped the coils of each set 17, 17' into two subsets. The currents through the two subsets flow in opposite directions, causing two oppositely oriented magnetic fields to be generated. Since the power supply control 19 is connected to a position sensor 22, which provides the power supply control 19 with information about the relative positions of the parts 11 en 12, it is capable of ensuring that a current through a group of coils 17a", 17b", etc. directly facing a passing permanent magnet, i.e. a first subset, is directed in a first direction and that the current through remaining coils, i.e. a second subset, is directed in a second, opposite direction. For such a configuration, the random stroke position shown in FIG. 3A, for example, roughly corresponds to the situation shown in FIG. 3B.

In an alternative embodiment, not shown in the figures, the at least one set of windings constitutes a coil, wherein the windings of the coil are in sliding contact with an electrical contact that is connectable to an electric power supply, such that the direction of the current through a subset of windings on one side of the contact is opposite to the direction of a current through the subset of windings on the other side of the contact. The free ends of the coil may be connected to ground and the contact may be connected to a DC-source having an electric potential above ground, which electric potential may be variable. Such a connection leads to opposite currents in the two parts of the one coil.

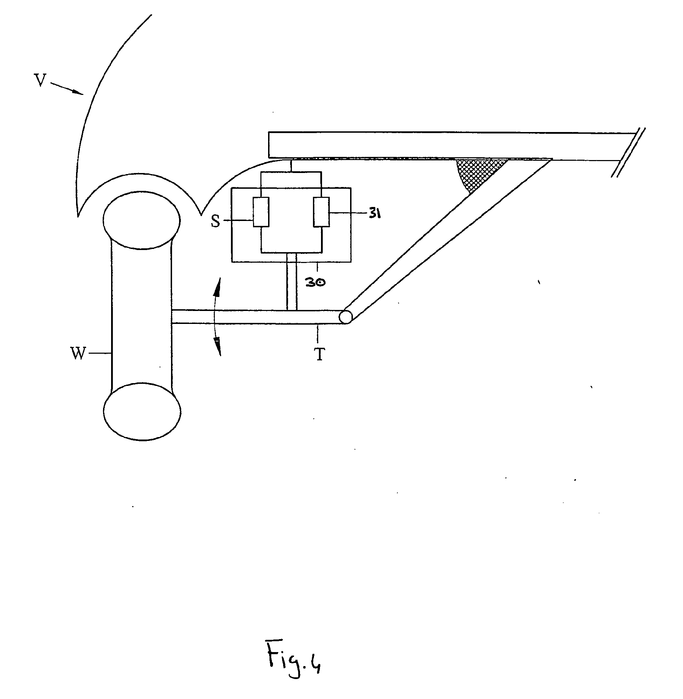

FIG. 4 schematically shows a vehicle V with a wheel W and a wheel suspension T. The wheel suspension is provided with a spring S according to the invention. More particularly, the suspension is provided with an assembly 30, comprising a spring S according to the invention and a damper 31. Although depicted separately, the damper 31 can be integrated into the spring S. When the spring S is of the active type as described above, the spring characteristic can be adapted to the driving circumstances of the vehicle V. For example roll can be counteracted in curves, diving of the vehicle during braking can be counteracted and the spring force-displacement characteristic can be adapted to the type of road, the speed and/or the way of driving, i.e. sportive or relaxed and comfortable. All these variations can be effected instantaneously without virtually any response time by means of the control 19 which controls the current level and current direction in the coils 17a, 17a', 17b, 17b' etc. of the spring S.

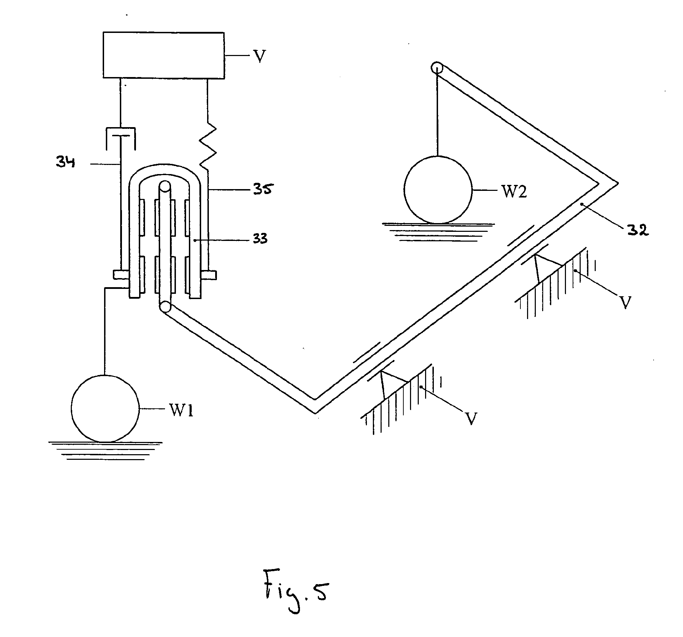

FIG. 5 schematically shows an embodiment of a vehicle V provided with a first and a second wheel W1, W2 and an anti roll bar 32. The vehicle comprises anti roll bar spring 33 which is an embodiment of a spring according to the invention and which is connected in series with the anti roll bar 32 between the first and the second wheels W1, W2. Additionally, a damper 34 and a conventional spring 35 or an additional spring according to an embodiment of the invention can be provided for suspension of each wheel W1, W2. Especially when the anti roll bar spring 33 is of the active type, the roll behavior of the vehicle V can be adapted as desired, e.g. in dependence to the type of road, the speed and/or the way of driving, i.e. sportive or relaxed and comfortable. All these variations can be effected instantaneously without virtually any response time It is clear that the invention is not limited to the embodiments described above. Combinations of the various embodiments are also feasible if remaining within the scope of the present invention as defined by the appended claims, for example, a multi gap spring having more than two teeth in each gap and having coils between the neighboring teeth for creating a coil magnetic field.

## Claims

1. Spring comprising a first part (1) and a second part (2) the two parts being movable relative to each other along, a longitudinal axis, the first part being provided with at least one permanent magnet (4, 4'), the second part being provided with at least one tooth (5, 5') of a magnetic material which faces the at least one permanent magnet with a facing surface (5a, 5a') when the first part is in an aligned position relative the second part, the first and/or the second part also being provided with at least one set of electrically conductive windings (7) which are connected to an electric power supply (8) in order to create a magnetic field for influencing the force-displacement characteristic of the spring, **characterised in that** the total area of the facing surface varies as the first part moves relative to the second part and **in that** said second part is provided with at least one tooth of soft magnetic material.

2. Spring according to claim 1, wherein a substantially common axis of the at least one set of windings extends in a direction substantially parallel to the longitudinal axis of the spring.

3. Spring according to claim 1 or 2, wherein a said permanent magnet provided on the first part is positioned relative to the at least one set of windings such that the permanent magnet moves along said set of windings provided on the second part, when the first part moves out of the aligned position relative to the second part.

4. Spring according to any of the claims 1-3, wherein the at least one set of windings comprises a number of subsets of windings, each subset being composed of adjacent windings, the subsets being located at different longitudinal positions along the length of the first or the second part, wherein-at least one parameter of a current through the windings of a said subset, such as the direction or the strength of the current, is controllable by an electric power supply control (9) so as to be different from a corresponding parameter of a current through another of said subsets.

5. Spring according to claim 4, wherein the electric power supply control ensures that a current through a subset of a said set of windings, which subset is composed of windings that directly face the permanent magnet, is directed in a first direction and that the current through remaining windings is directed in a second direction opposite to the first direction.

6. Spring according to claim 4 or 5, wherein a combination of windings that composes a said subset of windings is variable during operation of the spring.

7. Spring according to any one of claims 4-6, wherein a number of adjacent windings of said set of windings constitute a coil, a said subset of windings including a number of said coils.

8. Spring according to claim 7, wherein the electric power supply control comprises a switching assembly, each switch being connected to a coil, a said coil being connected to said power supply via a said switch so that in a first position of the switch the current flows through the coil in a first direction, and in a second position of the switch the current flows through the coil in a second direction opposite to the first.

9. Spring according to any of the claims 4-8, further comprising a displacement sensing device for providing information about the distance over which the first part is displaced relative to the second part compared to a reference position, said displacement sensing device being configured to cooperate with the electric power supply control.

10. Spring according to claim 9, wherein the electric power supply control is configured to cooperate with the displacement sensing device for regulating the currents, including the direction thereof, through said different subsets of windings in dependence of the relative displacement of the first and second parts.

11. Spring according to any of the claims 4-10, wherein the electric power supply control has an input for a load sensor for providing information about a force being applied to the spring.

12. Spring according to claim 11, wherein the electric power supply control is configured to cooperate with the load sensor for regulating the currents, including the direction thereof, through said different subsets of windings.

13. Spring according to any one of the claims 1-12, wherein the at least one set of windings constitutes a coil, and wherein the windings of the coil are in sliding contact with an electrical contact that is connectable to an electric power supply, such that the direction of the current through a subset of windings on one side of the contact is opposite to the direction of a current through the subset of windings on the other side of the contact.

14. Spring according to any of the preceding claims, wherein the total area of the facing surface is maximal when the first part is in the aligned position relative to the second part, and diminishes as the first part moves out of the aligned position relative to the second part.

15. Spring according to any one of the preceding claims, wherein the second part is provided with at least two teeth, said teeth being interconnected by a soft magnetic material.

16. Spring according to any one of the preceding claims, wherein a permanent magnet is mounted on a base of soft magnetic material.

17. Spring according to any one of the preceding claims, wherein the second part is provided with at least one permanent magnet, said magnet being positioned next to a tooth, and said magnet being oriented such that its magnetic field increasingly opposes that of a permanent magnet provided on the first part as the first part moves out of the aligned position relative to the second part.

18. Spring according to any of the preceding claims, wherein the windings of the at least one set of electrically conductive windings with which the first and/or the second part of the spring is provided are substantially co-axial.

19. Assembly comprising a spring according to any one of the preceding claims and a conventional spring (35), the two springs being connected in parallel.

20. Assembly comprising a spring according to any one of the claims 1-18 and a conventional spring (35), the two springs being connected in series.

21. Assembly of a spring or spring assembly according to any one of the preceding claims and a damping device (34), the spring or spring assembly and the damping device being connected in parallel.

22. Vehicle provided with at least one wheel (W1, W2) and a suspension via which the wheel is connected to a chassis of the vehicle, the suspension comprising at least one spring or spring assembly according to any one of the preceding claims.

23. Vehicle provided with at least a first (W1) and a second (W2) wheel, an anti-roll bar (32) and an anti-roll bar spring (33), the latter being a spring or spring assembly according to any one of the claims 1-21 that is connected in series with the anti-roll bar between the first and the second wheel.

## Patentansprüche

1. Feder mit einem ersten Teil (1) und einem zweiten Teil (2), wobei die beiden Teile bezüglich einander entlang einer Längsachse bewegbar sind, wobei der erste Teil mit mindestens einem Permanentmagneten (4, 4') versehen ist, wobei der zweite Teil mit mindestens einem Zahn (5, 5') aus einem magnetischen Material versehen ist, der dem mindestens einen Permanentmagneten mit einer zugekehrten Fläche (5a, 5a') zugekehrt ist, wenn sich der erste Teil bezüglich des zweiten Teils in einer ausgerichteten Position befindet, wobei der erste und/oder der zweite Teil des Weiteren mit mindestens einem Satz von elektrisch leitenden Wicklungen (7) versehen ist/sind, die mit einer elektrischen Energieversorgung (8) verbunden sind, um ein Magnetfeld zur Beeinflussung der Kraft-Weg-Kennlinie der Feder zu erzeugen, **dadurch gekennzeichnet, dass** sich die Gesamtfläche der zugekehrten Fläche ändert, wenn sich der erste Teil bezüglich des zweiten Teils bewegt, und dass der zweite Teil mit mindestens einem Zahn aus einem weichmagnetischen Material versehen ist.

2. Feder nach Anspruch 1, wobei sich eine im Wesentlichen gemeinsame Achse des mindestens einen Satzes von Wicklungen in einer im Wesentlichen parallel zur Längsachse der Feder verlaufenden Richtung erstreckt.

3. Feder nach Anspruch 1 oder 2, wobei ein solcher Permanentmagnet, der am ersten Teil vorgesehen ist, bezüglich des mindestens einen Satzes von wicklungen so positioniert ist, dass sich der Permanentmagnet entlang dem Satz Wicklungen, der am zweiten Teil vorgesehen ist, bewegt, wenn sich der erste Teil aus der ausgerichteten Position bezüglich des zweiten Teils herausbewegt.

4. Feder nach einem der Ansprüche 1 - 3, wobei der mindestens eine Satz von Wicklungen mehrere Teilsätze von Wicklungen enthält, wobei jeder Teilsatz aus benachbarten Wicklungen besteht, wobei die Teilsätze in verschiedenen Längspositionen entlang der Länge des ersten oder des zweiten Teils positioniert sind, wobei mindestens ein Parameter eines Stroms durch die Wicklungen eines solchen Teilsatzes, wie zum Beispiel die Richtung oder die Stärke des Stroms, durch eine Steuerung (9) der elektrischen Energieversorgung so steuerbar ist, dass er sich von einem entsprechenden Parameter eines Stroms durch einen anderen der Teilsätze unterscheidet.

5. Feder nach Anspruch 4, wobei die Steuerung der elektrischen Energieversorgung gewährleistet, dass ein Strom durch einen Teilsatz eines solchen Satzes von Wicklungen, wobei der Teilsatz aus Wicklungen besteht, die dem Permanentmagneten direkt zugekehrt sind, in einer ersten Richtung ausgerichtet ist und dass der Strom durch die verbleibenden Wicklungen in einer zweiten Richtung, die der ersten Richtung entgegengesetzt ist, ausgerichtet ist.

6. Feder nach Anspruch 4 oder 5, wobei eine Kombination aus Wicklungen, die einen Teilsatz von Wicklungen bildet, während Betätigung der Feder variabel ist.

7. Feder nach einem der Ansprüche 4 - 6, wobei mehrere benachbarte Wicklungen des Satzes von Wicklungen eine Spule bilden, wobei ein Teilsatz von Wicklungen mehrere der Spulen enthält.

8. Feder nach Anspruch 7, wobei die Steuerung der elektrischen Energieversorgung eine Schaltanordnung umfasst, wobei jeder Schalter mit einer Spule verbunden ist, wobei eine Spule über den Schalter so mit der Energieversorgung verbunden ist, dass in einer ersten Stellung des Schalters der Strom in einer ersten Richtung durch die Spule fließt und in einer zweiten Stellung des Schalters der Strom in einer zweiten Richtung, die der ersten Richtung entgegengesetzt ist, durch die Spule fließt.

9. Feder nach einem der Ansprüche 4 - 8, die weiterhin eine Wegerfassungsvorrichtung zur Bereitstellung von Informationen über den Weg, über den der erste Teil bezüglich des zweiten Teils im Vergleich zu einer Bezugsposition verschoben wird, umfasst, wobei die Wegerfassungsvorrichtung dazu konfiguriert ist, mit der Steuerung der elektrischen Energieversorgung zusammenzuwirken.

10. Feder nach Anspruch 9, wobei die Steuerung der elektrischen Energieversorgung dazu konfiguriert ist, mit der Wegerfassungsvorrichtung zusammenzuwirken, um die Ströme zu regulieren, einschließlich ihrer Richtung durch die verschiedenen Teilsätze von Wicklungen in Abhängigkeit von der relativen Verschiebung des ersten und des zweiten Teils.

11. Feder nach einem der Ansprüche 4-10, wobei die Steuerung der elektrischen Energieversorgung einen Eingang für einen Lastsensor zur Bereitstellung von Informationen über eine an die Feder angelegte Kraft aufweist.

12. Feder nach Anspruch 11, wobei die Steuerung der elektrischen Energieversorgung dazu konfiguriert ist, mit dem Lastsensor zusammenzuwirken, um die Ströme zu regulieren, einschließlich ihrer Richtung durch die verschiedenen Teilsätze von Wicklungen.

13. Feder nach einem der Ansprüche 1-12, wobei der mindestens eine Satz von Wicklungen eine Spule bildet und wobei die Wicklungen der Spule in Gleitkontakt mit einem elektrischen Kontakt stehen, der mit einer elektrischen Energieversorgung verbunden werden kann, so dass die Richtung des Stroms durch einen Teilsatz von Wicklungen auf einer Seite des Kontakts der Richtung eines Stroms durch den Teilsatz von Wicklungen auf der anderen Seite des Kontakts entgegengesetzt ist.

14. Feder nach einem der vorhergehenden Ansprüche, wobei die Gesamtfläche der zugekehrten Fläche maximal ist, wenn sich der erste Teil bezüglich des zweiten Teils in einer ausgerichteten Position befindet, und kleiner wird, wenn sich der erste Teil aus der ausgerichteten Position bezüglich des zweiten Teils herausbewegt.

15. Feder nach einem der vorhergehenden Ansprüche, wobei der zweite Teil mit mindestens zwei Zähnen versehen ist, wobei die Zähne durch ein weichmagnetisches Material miteinander verbunden sind.

16. Feder nach einem der vorhergehenden Ansprüche, wobei ein Permanentmagnet auf einer Basis aus weichmagnetischem Material angebracht ist.

17. Feder nach einem der vorhergehenden Ansprüche, wobei der zweite Teil mit mindestens einem Permanentmagneten versehen ist, wobei der Magnet neben einem Zahn positioniert ist und der Magnet so ausgerichtet ist, dass sein Magnetfeld dem eines am ersten Teil vorgesehenen Permanentmagneten zunehmend entgegenwirkt, wenn sich der erste Teil aus der ausgerichteten Position bezüglich des zweiten Teils heraus bewegt.

18. Feder nach einem der vorhergehenden Ansprüche, wobei die Wicklungen des mindestens einen Satzes von elektrisch leitenden Wicklungen, mit denen der erste und/oder der zweite Teil der Feder versehen ist, im Wesentlichen koaxial sind.

19. Anordnung, die eine Feder nach einem der vorhergehenden Ansprüche und eine herkömmliche Feder (35) umfasst, wobei die beiden Federn parallel geschaltet sind.

20. Anordnung, die eine Feder nach einem der Ansprüche 1-18 und eine herkömmliche Feder (35) umfasst, wobei die beiden Federn in Reihe geschaltet sind.

21. Anordnung aus einer Feder oder Federanordnung nach einem der vorhergehenden Ansprüche und einer Dämpfungsvorrichtung (34), wobei die Feder oder Federanordnung und die Dämpfungsvorrichtung parallel geschaltet sind.

22. Fahrzeug, das mit mindestens einem Rad (W1, W2) und einer Aufhängung verbunden ist, über die das Rad mit einem Chassis des Fahrzeugs verbunden ist, wobei die Aufhängung mindestens eine Feder oder Federanordnung nach einem der vorhergehenden Ansprüche umfasst.

23. Fahrzeug, das mit mindestens einem ersten (W1) und einem zweiten (W2) Rad, einem Stabilisator (32) und einer Stabilisatorfeder (33) versehen ist, wobei letztere eine Feder oder Federanordnung nach einem der Ansprüche 1-21 ist, die mit dem Stabilisator zwischen dem ersten und dem zweiten Rad in Reihe geschaltet ist.

## Revendications

1. Ressort comprenant une première partie (1) et une deuxième partie (2), ces deux parties étant mobiles l'une par rapport à l'autre le long d'un axe longitudinal, la première partie étant pourvue d'au moins un aimant permanent (4, 4'), la deuxième partie étant pourvue d'au moins une dent (5, 5') en un matériau magnétique tendre qui fait face au au moins un aimant permanent avec une surface faisant face (5a, 5a') lorsque la première partie est dans une position alignée par rapport à la deuxième partie, la première et/ou la deuxième partie étant aussi pourvues d'au moins un ensemble d'enroulements électriquement conducteurs (7) qui sont connectés à une alimentation électrique (8) afin de créer un champ magnétique pour influencer la caractéristique force-déplacement du ressort, **caractérisé en ce que** l'aire totale de la surface faisant face varie tandis que la première partie bouge par rapport à la deuxième partie, et **en ce que** ladite deuxième partie est pourvue d'au moins une dent en matériau magnétique tendre.

2. Ressort selon la revendication 1, dans lequel un axe essentiellement commun du au moins un ensemble d'enroulements s'étend dans une direction essentiellement parallèle à l'axe longitudinal du ressort.

3. Ressort selon la revendication 1 ou 2, dans lequel un dit aimant permanent prévu sur la première partie est positionné par rapport au au moins un ensemble d'enroulements de façon à ce que cet aimant permanent bouge le long dudit ensemble d'enroulements prévu sur la deuxième partie, lorsque la première partie bouge hors de la position alignée par rapport à la deuxième partie.

4. Ressort selon l'une quelconque des revendications 1 à 3, dans lequel le au moins un ensemble d'enroulements comprend un certain nombre de sous-ensembles d'enroulements, chaque sous-ensemble étant composé d'enroulements adjacents, ces sous-ensembles étant situés dans différentes positions longitudinales le long de la longueur de la première ou de la deuxième partie, dans lequel au moins un paramètre d'un courant à travers les enroulements d'un dit sous-ensemble, tel que la direction ou l'intensité du courant, est contrôlable par une commande d'alimentation électrique (9) de façon à être différent d'un paramètre correspondant d'un courant à travers un autre desdits sous-ensembles.

5. Ressort selon la revendication 4, dans lequel la commande d'alimentation électrique fait en sorte qu'un courant à travers un sous-ensemble d'un dit ensemble d'enroulements, lequel sous-ensemble est composé d'enroulements qui font face directement à l'aimant permanent, soit dirigé dans une première direction et que le courant à travers les autres enroulements soit dirigé dans une deuxième direction opposée à la première direction.

6. Ressort selon la revendication 4 ou 5, dans lequel une combinaison d'enroulements qui compose un dit sous-ensemble d'enroulements est variable pendant le fonctionnement du ressort.

7. Ressort selon l'une quelconque des revendications 4 à 6, dans lequel un certain nombre d'enroulements adjacents dudit ensemble d'enroulements constitue une bobine, un dit sous-ensemble d'enroulements comprenant un certain nombre desdites bobines.

8. Ressort selon la revendication 7, dans lequel la commande d'alimentation électrique comprend un ensemble de commutation, chaque commutateur étant connecté à une bobine, une dite bobine étant connectée à ladite alimentation via un dit commutateur de façon à ce que, dans une première position de ce commutateur, le courant s'écoule à travers cette bobine dans une première direction, et dans une deuxième position de ce commutateur, le courant s'écoule à travers cette bobine dans une deuxième direction opposée à la première.

9. Ressort selon l'une quelconque des revendications 4 à 8, comprenant en outre un dispositif de détection de déplacement pour fournir une information sur la distance sur laquelle la première partie est déplacée par rapport à la deuxième partie par comparaison avec une position de référence, ledit dispositif de détection de déplacement étant configuré de façon à coopérer avec la commande d'alimentation électrique.

10. Ressort selon la revendication 9, dans lequel la commande d'alimentation électrique est configurée de façon à coopérer avec le dispositif de détection de déplacement pour réguler les courants, y compris la direction de ceux-ci, à travers lesdits différents sous-ensembles d'enroulements en dépendance du déplacement relatif des première et deuxième parties.

11. Ressort selon l'une quelconque des revendications 4 à 10, dans lequel la commande d'alimentation électrique a une entrée pour un capteur de charge pour fournir une information sur une force appliquée sur le ressort.

12. Ressort selon la revendication 11, dans lequel la commande d'alimentation électrique est configurée de façon à coopérer avec le capteur de charge pour réguler les courants, y compris la direction de ceux-ci, à travers lesdits différents sous-ensembles d'enroulements.

13. Ressort selon l'une quelconque des revendications 1 à 12, dans lequel le au moins un ensemble d'enroulements constitue une bobine, et dans lequel les enroulements de cette bobine sont en contact glissant avec un contact électrique qui est connectable à une alimentation électrique, de façon à ce que la direction du courant à travers un sous-ensemble d'enroulements sur un côté du contact soit opposée à la direction d'un courant à travers le sous-ensemble d'enroulements sur l'autre côté du contact.

14. Ressort selon l'une quelconque des revendications précédentes, dans lequel l'aire totale de la surface faisant face est maximale lorsque la première partie est dans la position alignées par rapport à la deuxième partie, et diminue tandis que la première partie bouge hors de la position alignée par rapport à la deuxième partie.

15. Ressort selon l'une quelconque des revendications précédentes, dans lequel la deuxième partie est pourvue d'au moins deux dents, lesdites dents étant interconnectées par un matériau magnétique tendre.

16. Ressort selon l'une quelconque des revendications précédentes, dans lequel un aimant permanent est monté sur une base de matériau magnétique tendre.

17. Ressort selon l'une quelconque des revendications précédentes, dans lequel la deuxième partie est pourvue d'au moins un aimant permanent, ledit aimant étant positionné à côté d'une dent, et ledit aimant étant orienté de façon à ce que son champ magnétique s'oppose de manière croissante à celui d'un aimant permanent prévu sur la première partie tandis que la première partie bouge hors de la position alignée par rapport à la deuxième partie.

18. Ressort selon l'une quelconque des revendications précédentes, dans lequel les enroulements du au moins un ensemble d'enroulements électriquement conducteurs dont la première et/ou la deuxième partie du ressort est pourvue sont essentiellement coaxiaux.

19. Ensemble comprenant un ressort selon l'une quelconque des revendications précédentes et un ressort conventionnel (35), ces deux ressorts étant connectés en parallèle.

20. Ensemble comprenant un ressort selon l'une quelconque des revendications 1 à 18 et un ressort conventionnel (35), ces deux ressorts étant connectés en série.

21. Ensemble d'un ressort ou d'un ensemble de ressorts selon l'une quelconque des revendications précédentes et d'un dispositif d'amortissement (34), ce ressort ou cet ensemble de ressorts et ce dispositif d'amortissement étant connectés en parallèle.

22. Véhicule pourvu d'au moins une roue (W1, W2) et d'une suspension via laquelle cette roue est rattachée à un châssis du véhicule, cette suspension comprenant au moins un ressort ou un ensemble de ressorts selon l'une quelconque des revendications précédentes.

23. Véhicule pourvu d'au moins une première (W1) et une deuxième (W2) roue, d'une barre stabilisatrice (32) et d'un ressort de barre stabilisatrice (33), ce dernier étant un ressort ou un ensemble de ressorts selon l'une quelconque des revendications 1 à 21 qui est connecté en série avec la barre stabilisatrice entre la première et la deuxième roue.
